(19) **Europäisches Patentamt**
**European Patent Office**
**Office européen des brevets**

(11) **EP 4 383 790 A1**

(12) **EUROPEAN PATENT APPLICATION**

(43) Date of publication:
**12.06.2024 Bulletin 2024/24**

(21) Application number: **22306786.9**

(22) Date of filing: **05.12.2022**

(51) International Patent Classification (IPC):
**H04W 24/02** (2009.01)    **G06N 7/01** (2023.01)
**G06N 20/00** (2019.01)    **G06N 3/006** (2023.01)

(52) Cooperative Patent Classification (CPC):
**G06N 7/01; G06N 3/006; G06N 20/00;**
**H04W 24/02;** H04W 72/04

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicants:
• **Mitsubishi Electric R&D Centre Europe B.V.**
**1119 NS  Schiphol Rijk Amsterdam (NL)**
Designated Contracting States:
**FR**
• **MITSUBISHI ELECTRIC CORPORATION**
**Chiyoda-ku**
**Tokyo 100-8310 (JP)**
Designated Contracting States:
**AL AT BE BG CH CY CZ DE DK EE ES FI GB GR**
**HR HU IE IS IT LI LT LU LV MC ME MK MT NL NO**
**PL PT RO RS SE SI SK SM TR**

(72) Inventors:
• **CORLAY, Vincent**
**35708 Rennes Cedex 7 (FR)**
• **SIBEL, Jean-Christophe**
**35708 Rennes Cedex 7 (FR)**

(74) Representative: **Plasseraud IP**
**66, rue de la Chaussée d'Antin**
**75440 Paris Cedex 09 (FR)**

(54) **A METHOD, DEVICE AND COMPUTING DEVICE TO IMPROVE ACTION SELECTION IN AN ACTIONNABLE SYSTEM**

(57)    The invention discloses a computer-implemented method to select an action among a set of possible actions to perform in a system in a current state among a set of possible states of the system at a time step, said method comprising: performing a selection of the action that, from said current state, leads the system to follow a path corresponding to series of actions and state transitions at successive time steps having a gain at least equal to or higher than a predefined value, with the highest probability ; causing the system to perform said action.

FIG. 3

**Description**

**Technical Field**

This disclosure pertains to the field of the selection of actions to be performed by a system. More specifically, it pertains to the field of the selection of optimal actions of the system when performing actions whose output is not deterministically known.

**Background Art**

Many systems can be modeled in order to determine which actions should be performed by the system to optimize an output. Examples of such systems include for example robots, schedulers, or more generally any physical system which is able to perform actions in order to fulfill a goal.

In many systems, the output of a same action may result in different outputs. For example, if a robot is instructed to look for an object while its battery is low, it is usually not possible to know in advance if the robot will find the object, or stop because its battery has been completely discharged. In another example, if a scheduler of a radio communication network grants a radio resource to a user terminal to send a message, the user terminal may successfully send the message, or fail to send the message depending upon network conditions that are not predictable. Certain outputs, such as finding the object by the robot, or successfully sending the message, are considered as desirable, while others, such as completely discharging the battery of the robot, or failing to send a message, are considered as not desirable. It is therefore a general objective of controlling systems to improve the probability of obtaining the most desirable outputs.

The situation becomes however complex, when successive actions cause long term outputs that are not deterministically predictable. For example, a scheduler of a radio communication network may grant radio resources to different user terminals without knowing in advance if the emission of messages by the user terminals will be successful. Meanwhile, some user terminals may be tied by application constraints (e.g constraints from the application that requests the transmission of a message), and miss a constraint if a message is sent too late, which is considered as a very undesirable output. The optimization of decision processes for such systems is therefore a thorough problem.

Markov Decision Processes (MDP) provide a framework for solving such problem. MDP models a system using actions, rewards, and state transition probabilities. At each time step, the system is in a current state, wherein it can perform a plurality of different actions. Upon the execution of an action, a state transition can occur from the current state to one or more subsequent state, with different probabilities. The probability of a state transition to occur depends upon the current state, and the action which is performed.

Each state transition is also associated with a reward, which may be positive or negative depending upon the desirability of the state transition. Different paths of successive actions and state transitions can thus be defined. Each path can be associated with a gain which is defined according to the successive rewards of the state transitions of the path, and a probability which corresponds to a combination of the probabilities of the state transitions of the path. Therefore, the MDP framework allows associating to each path a gain defining whether long-term outcome of the path is desirable or not, and a probability of the path to occur upon the execution of a series of actions in the successive states of the paths.

MDP-based decision algorithms are for example described by R. S. Sutton and A. G. Barto, "Reinforcement Learning, An Introduction", 2nd ed., The MIT Press, 2020. MDP-based Decision algorithms usually select, in current state, an action that maximizes an expected gain. More specifically, they calculate an average gain for each state, and determine for each possible action in a current state, the gains and associated probabilities of associated with each possible subsequent state. They then select the action that provides the highest expected gain.

If such decision process generally allows increasing the expected gain of the system, they fail to take into account the probability of the action to lead to potentially catastrophic outcomes. Indeed, an action associated with a high expected gain may lead only to paths with high gains, but also to many paths with very high gains, and few paths with low probabilities and very low gains. A decision process based on a maximum expected gain therefore fails to minimize the likelihood of potentially catastrophic outcomes.

There is therefore the need for a decision process which reduces the probability of selecting actions that lead to very negative long-term outcomes, in a system where the long term effect of each action is not known in advance in a deterministic manner.

**Summary**

This disclosure improves the situation.

It is proposed a computer-implemented method to select an action among a set of possible actions to perform in a system in a current state among a set of possible states of the system at a time step, said method comprising:

performing a selection of the action that, from said current state, leads the system to follow a path corresponding to series of actions and state transitions at successive time steps having a gain at least equal to or higher than a predefined value, with the highest probability ; causing the system to perform said action.

By "system" we designate a representation of a real world system that can be modeled according to different states and perform different actions, each action possibly causing the system to switch from an initial state to one or more possible subsequent states.

By "path" we designate a series of successive transitions between successive states of the system at successive time steps. Within a path each transition may be associated or not with an action.

By "following a path by the system", we designate that the succession of states and state transitions of the system over successive time steps corresponds to the succession of states and states transition defined by the path.

By "leading the system to follow a path with a probability", we designate that, when the system is in a state and performs an action, it is expected to have a given probability of following the path.

By "gain" we designate a value associated to the path, which indicates to which extent the succession of states defined by the path corresponds to a good or bad outcome.

By "a path arising from said current state upon the execution of the action", we designate a path for which the initial state of the first state transition is the current state, and whose first transition is possible from said current state upon the execution of the action.

This allows selecting the action that exhibits the lowest probability of leading to a gain below a predefined threshold, in a system wherein each action may lead to different outcomes with a defined probability.

Therefore, this allows performing actions to have the highest possible probability of avoiding outcomes considered as bad in a system where the long term effect of each action is not known in advance in a deterministic manner.

In another aspect, it is proposed a computing device comprising at least one processing unit configured to implement at least a part of a method as defined here.

In another aspect, it is proposed a radio resource scheduler of a radio communication network, comprising at least one processing unit configured to implement at least a part of a method as defined here.

In another aspect, it is proposed a computer software comprising instructions to implement at least a part of a method as defined here when the software is executed by a processor.

In another aspect, it is proposed a computer-readable non-transient recording medium on which a software is registered to implement the method as defined here when the software is executed by a processor.

The following features, can be optionally implemented, separately or in combination one with the others:

Advantageously, said selection is based upon:retrieving a transition model defining, for at least one state transition from an initial state to a subsequent state between two successive time steps, a probability of performing the transition from the initial state to the subsequent state upon the execution of an action belonging to a set of possible actions to perform in the initial state, and a reward associated with the transition ; using at least the transition model to calculate, for a plurality of paths: gains of said plurality of paths;probabilities of said plurality of paths.

By "transition model", we designate a model that defines states transitions, and determines probabilities and rewards associated to each state transitions. At least one of the probabilities of state transitions may depend upon an action executed by the system in a state.

By "reward", we designate a value indicating the desirability of a transition. A reward can be positive if the transition produces a desirable outcome, or negative if the transition produces an undesirable outcome.

By "obtaining", we designate different means of getting for each path of said plurality a probability and a gain. For example, said step of obtaining may comprise:

- calculating the probabilities and gain ;

- reading or receiving probabilities and gains pre-calculated during a training phase;

- Etc.

This allows taking into account the probabilities and outcomes associated to the possible transitions for the determination of the gain of the path, and therefore obtain a calculation of the gain of the path that accurately takes into account the evolution of the states of the system.

These features are also advantageous as such, and it is also proposed a method comprising the steps described above alone.

It is therefore also proposed a computer-implemented method comprising : retrieving a transition model defining, for at least one state transition from an initial state to a subsequent state between two successive time steps, a probability of performing the transition from the initial state to the subsequent state upon the execution of an action belonging to a set of possible actions to perform in the initial state, and a reward associated with the transition; using the transition model to calculate, for a plurality of paths: gains of said plurality of paths; probabilities of said plurality of paths.

Advantageously, gains of said plurality of paths are calculated as cumulative rewards of series of successive state transitions and actions of each path of said plurality of paths at successive time states ; probabilities of said plurality of paths are calculated as combined probabilities of each combination of a state transition and action of each path of said plurality of paths at successive time states.

By "cumulative rewards" we designate a sum of the rewards corresponding to the successive state transitions of a path. A reward may depend upon a state transition only, or upon both a state transition and the corresponding action. The sum may be a weighted sum. For example, the weight associated to each reward may decrease over the time steps

By "combined probabilities" we designate a probability for the path defined as a combination of the probabilities of the state transitions. A combined probability may typically be the product of the probabilities of the successive state transitions.

This allows using all the transitions in a finite or infinite time window to determine the gain and probability of a path, and therefore obtaining reliable calculation of the gains and probabilities of the paths.

Advantageously, a binning rule is applied to reference gains of paths arising from each state to get a size of a reference set associated to each state comprising gains of paths arising from the state, and probabilities of said paths to a predefined size.

By "binning rule", we designate a rule that merge a plurality of paths associated with similar gains as a single path having a probability equal to the cumulated probabilities of the paths belonging to the bin.

This allows limiting the number of paths to take into account, by merging paths associated with similar gains. This therefore allows limiting the complexity of calculation, while obtaining reliable results of gains and probabilities.

Advantageously, using the model to calculate gains and probabilities comprises performing an iterative calculation, for each state in said set of possible states, of a reference set of the state comprising reference gains of the paths arising from said state upon the execution of an action, and reference probabilities of causing the system to follow said paths arising from said state upon the execution of said action, said iterative calculation applying at each iteration said binning rule.

This allows recursively computing the gains and probabilities of the paths starting from each possible state, while maintaining the size of the set representing the probabilities and gains of the path starting from each state, and therefore making a recursive calculation possible even when the number of possible paths is large.

Advantageously, said iterative calculation comprises: obtaining, for each state in said set of possible states, an initial reference set ; until a stop criterion is met : for each state in said set of possible states ; selecting an action to perform in said state according to a policy ; re-defining said initial reference set of the state by concatenating, for each subsequent state having a non-null probability of transition from said state using said selected action: the reference gains in the reference set of said subsequent state, multiplied by a discount factor and added to a reward of the transition from said state to said subsequent state ; the reference probabilities of said subsequent state, multiplied by said non-null probability of transition ; reducing the size of the reference set of the state to said predefined size by applying the binning rule to the reference gains of the state

By "policy", we designate a set of rules that define which action should be performed in which state of the system.

This provides an effective way of implementing the recursive calculation, while ensuring that a stop criterion is complied with by the end of the calculation.

Advantageously, said iterative calculation comprises: obtaining, for each state in said set of possible states, an initial reference set ; until a stop criterion is met: for each state in said set of possible states: obtaining, for each possible action in said state, probabilities of going to each subsequent state upon the execution of the possible action in said state ; selecting the action of said possible actions that, from said state, leads the system to follow a path corresponding to series of actions and state transitions at successive time steps having a gain at least equal to or higher than a predefined value, with the highest probability; re-defining said initial reference set of the state by concatenating, for each subsequent state having a non-null probability of transition from said state using said selected action: the reference gains in the reference set of said subsequent state, multiplied by a discount factor and added to a reward of the transition from said state to said subsequent state ; the reference probabilities of said subsequent state, multiplied by said non-null probability of transition; reducing the size of the reference set of the state to said predefined size by applying the binning rule to the reference gains of the state.

This allows obtaining a policy which is optimized for the objective of obtaining the highest probability of selecting an action that leads to a gain higher than or at least equal to a threshold.

Advantageously, said stop criterion is selected in a group comprising at least one of : a maximum number of iterations ; a criterion of convergence of the gains between two successive iterations.

Advantageously, said transition model belongs to Markov Decision Process models, wherein a gain of a path is calculated as a weighted sum of the rewards of each successive transition in the path where the weight is a discount factor comprised between zero and one raised to the power of an index of the transition.

By "discount factor", we designate a factor that reduces the relative importance of rewards corresponding to more time steps depending upon their time difference with a current time step.

Markov Decision Process models provide an efficient way of calculating the gains, wherein successive rewards are taken into account, and the weight factors associated with the rewards decrease over time.

Advantageously, said step of using the transition model further comprises using a machine learning model trained to predict path probabilities from a state of the paths arising from said state to have a gain belonging to each interval among a plurality of intervals of possible gains.

This allows storing only a trained model, and therefore reducing the size of the model parameters, while providing accurate predictions of probabilities.

Advantageously, said machine learning model is iteratively trained using error signals calculated as a cost function based on predictions of path probabilities from an initial state and predictions of path probabilities from subsequent states multiplied by the probabilities of transitions from said initial state to said subsequent states upon the execution of the action that, from said initial state, leads the system to follow a path having a gain at least equal to or higher than a predefined value with the highest probability.

This allows efficiently training the machine learning model, to converge to predictions that are consistent with an optimal action selection.

Advantageously, said iterative calculation comprises: until a stop criterion is met: performing a loop of selection of a plurality of states in said set of possible states, and, for each state in said plurality of states: using the machine learning model to calculate predictions of path probabilities of from said initial state ; for each possible action in said state: retrieving, from said transition model, probabilities of going to each subsequent state upon the execution of said possible action, and associated rewards in the transition model ; using the machine learning model to calculate predictions of path probabilities from each of said subsequent state; calculating, from said predictions of path probabilities of from each of said subsequent state, and probabilities of going to each subsequent state upon the execution of said possible action, and associated rewards, predictions of path probabilities from said initial state upon the execution of said possible action ; selecting, from said predictions of path probabilities of from said initial state upon the execution of said possible action, the action that, from said initial state, leads the system to follow a path having a gain at least equal to or higher than a predefined value with the highest probability ; calculating a value of said cost function based on the predictions of path probabilities from said initial state, and predictions of path probabilities from said initial state upon the execution of said possible action that, from said initial state, leads the system to follow a path having a gain at least equal to or higher than a predefined value with the highest probability ; updating the machine learning model based on a plurality of values of said cost function calculated for said plurality of states

This provides an effective way of training a machine learning model to calculate the probabilities of the paths for each action in each state, and therefore determine the action to select.

Advantageously, the method is implemented by a resource allocator of said system, wherein: said set of possible actions corresponds to possible resource allocations in said state ; said rewards are defined according to outcomes of the resource allocations and state transitions for the system.

By "resource allocator", we designate a module that is able to allocate physical or computing resources of a physical or computing system.

This allows the resource allocator to allocate resources in order to reduce the probability of a resource allocation that leads to a negative outcome for the system.

Advantageously, the method is implemented by a radio resources scheduler of a radio communication network, wherein : said set of possible actions correspond to possible allocations of radio resources to users of the radio communication network; at least one probability of performing a state transition depends upon a probability of a user of the radio communication network to successfully send a packet over the network when a radio resource is allocated to it; at least one reward depends upon the compliance with time constraints of sending at least one packet.

By "time constraints of sending at least one packet ", we designate any constraint relative to a time at which one or more packets should be sent. A time constraint may for example be a constraint relative to a time limit to send and / or receive a packet, such as a Round Trip Time (RTT), Packet Delay Budget (PDB), etc. The time constraint may for example be a time constraint formulated by an application which requires the transmission of a packet. In such case it can be called "application constraint".

This allows a radio resources scheduler to allocate radio resources to users of a radio communication network, in order reduce the likelihood of negative outcomes linked to failures to meet telecommunication constraints.

**Brief Description of Drawings**

Other features, details and advantages will be shown in the following detailed description and on the figures, on which:

**Fig. 1**

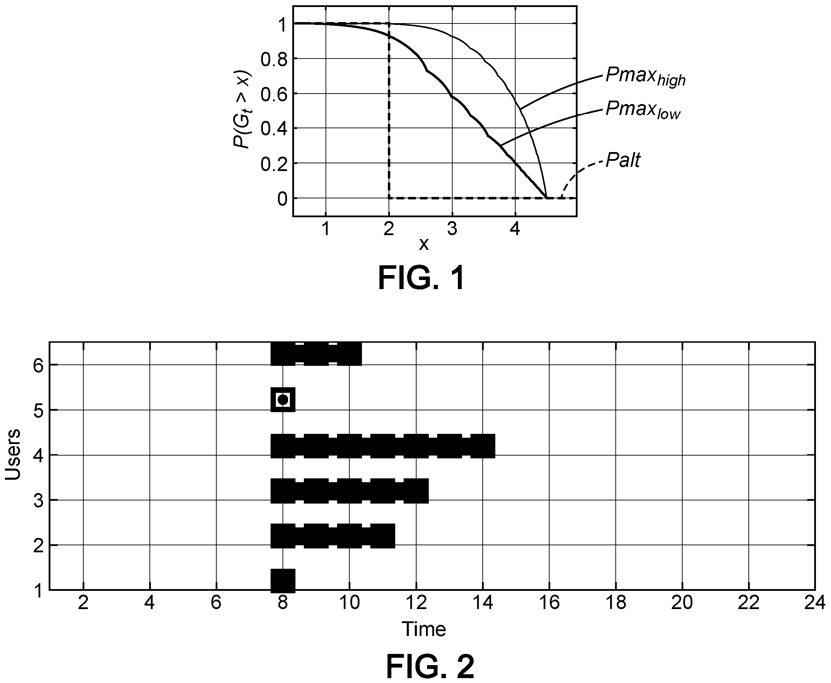

[Fig. 1] represents an example of gain depending upon policies in an exemplary system comprising a mobile robot modeled according to a MDP framework for the control of which the invention can be implemented.

**Fig. 2**

[Fig. 2] represents an example of a radio resources scheduler of a radio communication network for the control of which the invention can be implemented.

**Fig. 3**

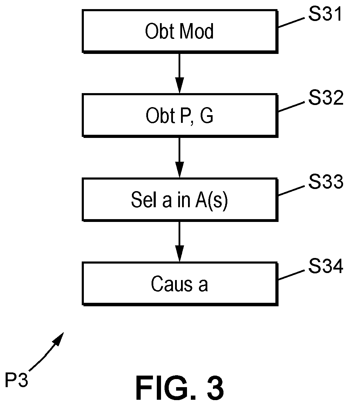

[Fig. 3] represents an example of computer-implemented method according to a number of embodiments of the invention.

**Fig. 4**

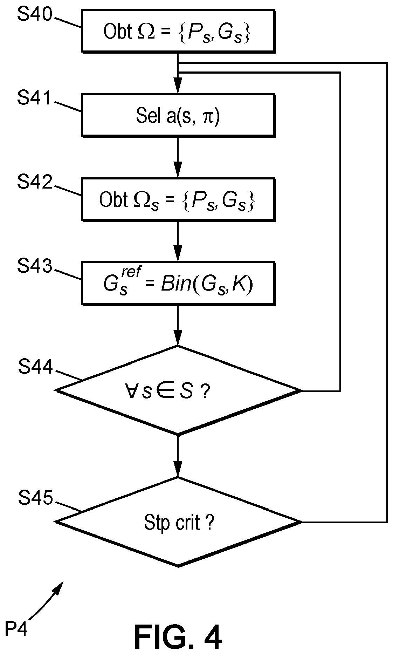

[Fig. 4] represents a first example of calculation of reference gains and probabilities according to an embodiment.

**Fig. 5**

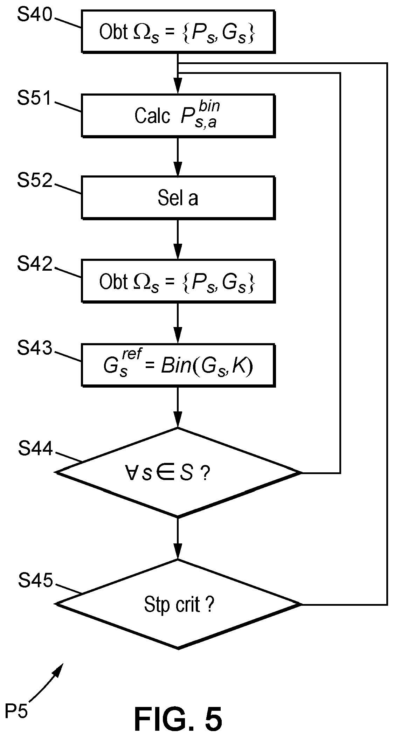

[Fig. 5] represents a second example of calculation of reference gains and probabilities according to an embodiment.

**Fig. 6**

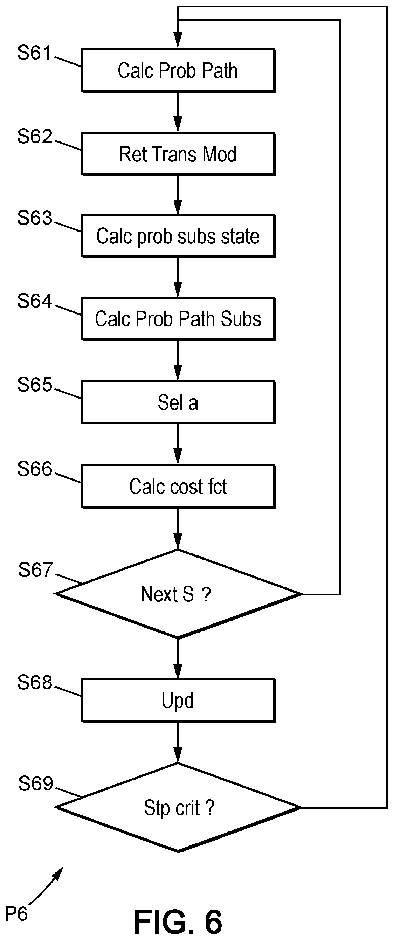

[Fig. 6] represents a third example of calculation of reference gains and probabilities according to an embodiment

**Fig. 7**

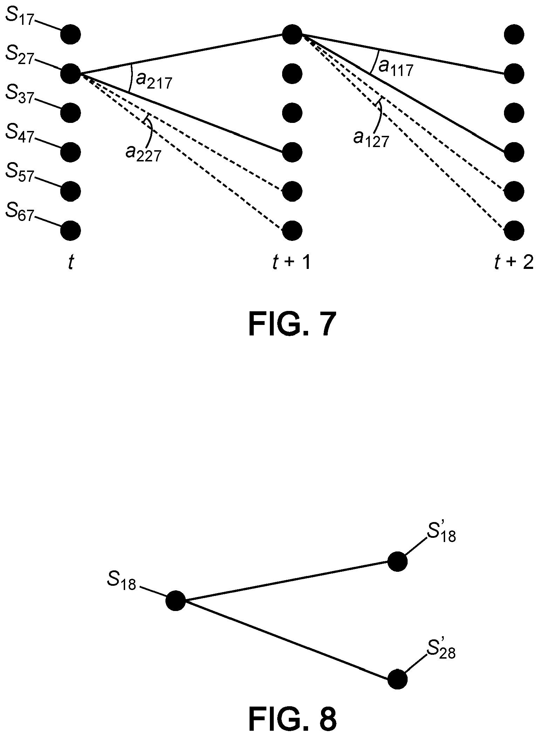

[Fig. 7] represents an example of a plurality of paths in an embodiment of the invention.

**Fig. 8**

[Fig. 8] represents a section of a trellis showing the possible paths in a number of embodiments of embodiments of the invention.

**Description of Embodiments**

In order to ease the presentation of the invention, some of the embodiments will be presented with respect to a model that complies the Markov Decision Process (MDP) framework. It is however worth noting that this is provided by means of non limitative example only, and that the invention is not restricted to this example of framework. In order to ease the presentation of the invention, some of the notations conventionally used in the MDP framework are reminded below. It shall be reminded that the definitions below are provided by means of non-limitative examples only of definitions in a number of embodiments of the invention.

In the MDP framework, the gain at a time t can for example be noted $G_t$, and expressed as:

$$G_t = \sum_{i=t}^{\infty} \lambda^{i-t} r_i,$$

*(Equation 1)*

Wherein:

- $r_i$ is the reward received at each time step i ;

- $\lambda$ represents the discount, with $0 < \lambda < 1$, which means that the weight allocated to the rewards decrease over time to tends towards 0.

It is also possible to calculate the gain in a finite time window. In such case, it is possible to have $\lambda = 1$.

In the MDP framework, a policy $\pi$ represents one or more decision rule to be used at each time step. Stated otherwise, a policy $\pi$ defines at each time step t the action that shall be performed by the system depending at least upon the state $s \in S$ where $S$ is the set of possible system states, in which the system is at the time step t.

In certain cases, a plurality of different policies are available. One problem to solve in systems modelled by the MDP framework is therefore to select an optimal policy among a set of possible policies.

A widely used solution in the prior art consists in selecting a policy that maximizes the expected gain $E[G_t]$.

The expected gain is calculated based on the probabilities of performing the different state transitions in the model depending upon the action performed at each time step by the policies. Here, the probabilities of the transitions model the randomness in the environment of the system.

As a given policy $\pi$ deterministically selects an action in a state, it is possible to define the value of a state $s \in S$ obtained with a given policy $\pi$, as the expected gain given that the system is in the state s at time t and the given policy $\pi$ is used:

$$v^{\pi}(s) = E[G_t|s].$$

(Equation 2)

A policy $\pi^*$ is considered as optimal if

$$v^{\pi^*}(s) \geq v^{\pi}(s), \ \forall s \in S \text{ and } \forall \pi.$$

(Equation 3)

Stated otherwise, a policy is considered as the optimal policy optimal if it provides a better value to each possible state than any possible alternative policy.

Under the optimal policy $\pi^*$, the value of a state s can be expressed via Bellman equation as:

$$v^{\pi^*}(s) = \max_{a \in A_s} Q(s,a),$$

(Equation 4)

$$Q(s,a) = R(s,a) + \lambda \sum_{s_j \in S} p(s_j|s,a)v^{\pi^*}(s_j)$$

(Equation 5)

Wherein:

- $A_s$ is the set of allowable actions in state s ;
- $p(s_j|s, a)$ denoting the transition probability from state s to state $s_j$ given action $a$ ;
- $r(s_j,s)$ is the reward obtained when going from state $s$ to state $s_j$ ;
- $R(s,a) = E[r|s,a] = \sum_j p(s_j|s,a)r(s_j,s)$.

Given $\pi^*$, the optimal action in a state $s$ is obtained as:

$$a^* = arg\ max_{a \in A_s} Q(s,a).$$

(Equation 6)

Within this framework, it is possible to compare pre-existing policies.

It is also possible to find policies. In particular, it is possible to define a policy that optimizes the maximum expected gain of the system. The standard approach to obtain the optimal policies consists in computing the values $v^{\pi^*}(s)$ by using the value iteration algorithm. It consists in computing $v_{n+1}(s)$, $\forall s \in S$, as:

$$v_{n+1}(s) = \max_{a \in A_s} \{R(s,a) + \lambda \sum_{s_j \in S} p(s_j|s,a)v_n(s_j)\}$$

(Equation 7)

This approach is for example described in R. S. Sutton and A. G. Barto, "Reinforcement Learning, An Introduction", 2nd ed., The MIT Press, 2020.

Where $v_n$ converges to $v^{\pi^*}(s)$. We refer to the obtained policy as the maximum expected gain policy.

As explained above, this policy definition allows obtaining a policy that provides a maximum expected gain, but it fails to take into account whether the policy may in some cases lead to very low gains. Stated otherwise, a maximum expected gain policies may be obtained that has a very high probability of leading to state transitions with high gains, but may in some cases lead to state transitions with very low gains. This situation is problematic, because low gains may correspond to catastrophic outcomes in physical systems.

It is now referred to figure 1.

Figure 1 represents an example of gain depending upon policies in an exemplary system comprising a mobile robot modeled according to a MDP framework for the control of which the invention can be implemented.

The example of figure 1 relates to a recycling robot problem. In this example, the problem is the following:

- a mobile robot running on a battery should collect empty cans ;

- the robot can be in two battery states forming a set of possible states $S = \{s_1 = $ "low", $s_2 = $ "high"\} ;

- in each of the two states, = the possible actions form a set of possible actions A = $\{a_1 = $ "search", $a_2 = $ "wait", $a_3 = $ "recharge"\} ;

- with the action "wait", the robot stays in the same state with probability $p(s_i|s_i,a_2) = 1$ and gets reward $r_{wait}$;

- with the action "search", the robot goes from state "high" to state "low" with probability $p(s_1|s_2,a_1) = 1 - \beta$ and gets reward $r_{search} > r_{wait}$ with probability 1. In the state "low", it stays in the same state also with probability $\beta$ and gets reward $r_{search}$, but it gets the negative reward $r_{rescue}$ otherwise and goes back to state "high". Finally, with the action "recharge", the robot goes to state "high" with probability $p(s_2|s_i,a_3) = 1$ and gets reward 0.

For the simulations, the following parameters are used: $r_{rescue} = -1$, $r_{wait} = 0.4$, $r_{search} = 0.9$, $\beta = 0.8$, and the discount $\lambda = 0.8$.

In this example, two policies are considered:

- the maximum expected gain policy consists in performing the action "search" for both states, i.e., the robot always searches, regardless of the state ;

- an alternative policy, where the robot implements the action "wait" in the state "low".

On this basis, the gains and probabilities are calculated for each possible series of state transitions for the two policies, when the robot is initially in state $s_1 = $ "low" , and $s_2 = $ "high".

Figure 1 represents the probabilities that a given policies provides an obtained gain higher than a number. More specifically:

- The horizontal axis represents numbers x;

- The vertical axis represents the probability $P(G_t > x)$ that the gain when using a policy is higher than x.

Figure 1 represents the probabilities that the obtained gain is higher than different numbers for different cases:

- $Pmax_{high}$ represents the probabilities for the maximum expected gain policy, when the robot is initially in state $s_2 = $ "high" ;

- $Pmax_{low}$ represents the probabilities for the maximum expected gain policy, when the robot is initially in state $s_1 = $ "low" ;

- $Palt$ represents the probabilities for the alternative policy, whatever the initial state of the robot.

More specifically, figure 1 represents the empirical complement cumulative density function (CCDF) obtained by simulating both policies.

Figure 1 shows that:

- the alternative policy provides a gain which is always equal to 2 ;

- the maximum expected gain policy has a very high probability of leading to a gain higher than 2, but also a non-null probability to lead to the gain lower than 2 in few cases

The cases wherein the maximum expected gain policy leads to a gain lower than 2 typically corresponds to a case wherein the battery of the robot discharges early, and the robot needs to be rescued early.

This example demonstrates that, event if the maximum expected gain policy generally provides good results, it may in some case cause negative outcomes. In particular, the maximum expected gain strategy is not optimal to maximize $p(G_t > \alpha|s_1)$ where $\alpha < 2$.

The invention may for example be used to improve the policies used by such a robot.

It is now referred to figure 2.

The invention may be used for defining policies for many different purposes, notably for resource allocation. For example, the invention may be used by a resource allocator to optimize resource allocation. A resource allocator may allocate physical or computing resources of a physical or computing system. For example, a resource allocator may allocate computing, memory, network resrouces, etc.

The invention may for example be used to improve the control of a radio resource scheduler of a radio communication network.

Figure 2 represents an example of a radio resources scheduler of a radio communication network for the control of which the invention can be implemented.

In the example of figure 2, the radio resource scheduler is able to allocate, at each time step, a single radio resource to a single user among 6 different users. The user to which the radio resource is allocated is able to send a packet. However, the packet transmission has a probability to fail which depends upon a number of factors, such as the user itself, state of the radio communication network, etc. Meanwhile, each user needs to comply with time constraints. For example, each user may need to periodically successfully send a packet. The time constraints may for example be application constraints, e.g. constraints that are formulated by the application which requires the packet to be transmitted.

In the example of figure 2, the horizontal axis represents the successive time steps. The current time step is time step 8, and the resource allocator has allocated the radio resource to user 5 as shown by the black dot in the figure. The vertical axis represents the different users. Each user is associated with a horizontal line, wherein squares represent the remaining number of time steps before they need to have successfully sent one packet.

In this example:

- users 1 and 5 need to send a packet at the latest at time step 8 ;

- user 2 need to send a packet at the latest at time step 11 ;

- user 3 need to send a packet at the latest at time step 12 ;

- user 4 need to send a packet at the latest at time step 14.

Thus, in this example:

- the set of possible actions comprise allocating a radio resource to users 1, 2, 3, 4, 5 or 6 respectively ;

- the state of the system comprises the number of time steps remaining before a packet need to be successfully sent by each user;

- upon the emission of a packet by a user, the packet transmission may succeed with a probability p, or fail with a probability 1 - p ;

- a highly negative reward if a time constraint is not complied with, that is to say, in the present case, if a user is not able to successfully transmit a packet before a transmission deadline. For example, if the time constraint is an application constraint, this may cause errors to occur in the application.

As will be explained in more details below, the method according to the invention allows obtaining a policy that increases the probability of having a gain higher than a threshold. Stated otherwise, it reduces the probability of having a gain lower than a threshold, which may for example correspond to undesirable outcome.

In the example of figure 2, the invention for example allows obtaining policies that reduce the probability of having a low gain, and thus reduce the probability of missing application deadlines.

The example of figure 2 is however provided by means of non-limitative example only of a radio resource allocator for the control of which the invention can be implemented, and the invention may be applied to other resource allocators in different embodiments.

It is now referred to figure 3.

Figure 3 represents an example of computer-implemented method P3 according to a number of embodiments of the invention.

The method P3 is a method to select an action a among a set of possible actions A(s) to perform in a system in a current state s among a set of possible states S of the system at a time step *t*.

For example, the method P3 may be implemented for controlling a system such as the system exemplified in figures 1 or 2. It may be for example implemented by the system itself, or by a computing device that controls the system. More generally, the method P3 can be implemented by any computing unit that is able to determine the actions that are performed by the system.

Therefore, the method P3 generally represents a phase called "inference phase", which is a phase in which actions are selected to control the system.

In a number of embodiments of the invention, some steps may be implemented within the inference phase and/or in a training phase upon which the inference phase relies. A training phase may for example consist in determining path probabilities or policies to apply to control the system.

The disclosure below may indicate, when applicable, method steps that may be implemented during the inference or the training phase.

Coming back to figure 3, the method P3 further comprises a first step S33 of selecting, in the current state, the action that, from said current state, leads the system to follow a path corresponding to series of actions and state transitions at successive time steps having a gain at least equal to or higher than a predefined value, with the highest probability.

For example, the first step S33 may consist in selecting the action that exhibits the highest sum of the probabilities of the paths arising from said current state upon the execution of the action that lead to a gain at least equal to or higher than a predefined value.

Stated otherwise, the step S33 does not comprise as in the prior art selecting the action that leads to the maximum gain expectation, but the action that minimize the probability of leading to a path that has a gain below, or equal to or below, a defined limit.

The method P3 further comprises a second step S34 of causing the system to perform the selected action.

Therefore, the method P3 causes the system to execute the action that lowers the probability that a path with a gain lower than, or equal to or lower than; a predefined limit, that may be called α in the remaining of the disclosure. As the gain may be defined according to the desirability of the outcomes of the actions performed by the system and state transitions, the method therefore limits the probability of ultimately causing an undesirable outcome. For example, if the method is implemented by a resource allocator, the method may lower the probability of causing a resource allocation that leads to very undesirable outcomes such as missing communication constraints, missing computing resources to successfully execute a program, etc.

The determination of probabilities to follow a path that has a gain at least equal to or higher than a predefined value may be performed in different ways. The steps described below may be partly of fully executed during a training phase. As will be explained in more details below, the gains and probabilities may be calculated either for a predefined policy, or for a policy which is iteratively defined during the training and/or inference phase by selecting optimal actions in each state.

One solution to associate to actions probabilities of leading the system to follow a path corresponding to series of actions and state transitions at successive time steps having a gain at least equal to or higher than a predefined value consists in running or simulating the system upon the execution of series of actions, and associating to the paths that have been followed by the system during the run or simulation of the system a gain which depends upon the outcome of the run or simulation.

For example, in the example of the scheduler illustrated in figure 2, the scheduler may be simulated or run a large number of times, with different actions, corresponding for example to a plurality of different policies, or an exhaustive selection of all the possible action in each state, that correspond to granting the radio resource to different users, then each resulting path followed by the system (i.e the successive states and state transitions of the system) can be associated to:

- a probability of observing that the system follows the path from a state upon the execution of the action. Such probability can be calculated by dividing the number of times the system followed the path from a state upon the occurrence of the action, by the number of time that the system performed the action in the state ;

- a gain determined according to an outcome of the path. For example, in the example of figure 2, a negative reward is added to the gain of the path each time an application deadline is missed.

Another option for determining the probabilities consists in calculating, before step S33) the probabilities using a transition model. This option is represented by the steps S31 and S32 in the figure 3.

Although the steps S31 and S32 are, in the figure 3, represented as preliminary step of the method P3, they may be performed, partly or fully, by a training method executed before the method P3.

A first preliminary step S31, executed by the method P3 or during a training phase, comprises retrieving a transition model defining, for at least one state transition from an initial state to a subsequent state between two successive time steps, a probability of performing the transition from the initial state to the subsequent state upon the execution of an action belonging to a set of possible actions to perform in the initial state, and a reward associated with the transition.

For example, the step S31 may comprise retrieving a model that complies with the MDP framework, and the transitions probabilities $p(s_j|s,a)$, and rewards $r(s_j,s)$ associated with the model.

A second preliminary step S32, executed by the method P3 or during a training phase, comprises obtaining, for a plurality of paths corresponding to series of actions and state transitions at successive time steps, probabilities and gains corresponding respectively to said plurality of paths, said probabilities and gains being calculated by using the model to calculate: gains of said plurality of paths; probabilities of said plurality of paths .

Stated otherwise, the step S32 allows obtaining, for each path among a plurality of paths, a gain of a path and a probability of the path to be followed. The gain and probabilities of the paths may be calculated during the execution of the method P3, or pre-calculated during a training phase. Examples of such determination are provided in figures 4, 5, 6 and 7.

It is now referred to figure 7.

Figure 7 represents an example of a plurality of paths in an embodiment of the invention.

The example of figure 7 is applicable, but not limited to, the implementation of the method within a MDP framework.

The figure 7 more specifically represents a trellis showing the possible paths.

In a number of embodiments of the invention, the gains and probabilities are calculated for each path based on the successive state transitions that form the path. The step S32 may thus comprise calculating:

- gains of said plurality of paths as cumulative rewards of each combination of a state transition and action of each path of said plurality of paths at successive time states ;

- probabilities of said plurality of paths as combined probabilities of each combination of a state transition and action of each path of said plurality of paths at successive time states.

The figure 7 provides a concrete example of such calculation.

In the example of figure 7, 3 successive time steps t, t + 1 and t + 2 are considered, and the system may be in 6 different states $s_{17}$, $s_{27}$, $s_{37}$, $s_{47}$, $s_{57}$ and $s_{67}$.

Few examples of transitions are represented in figure 7. For the sake of clarity, only a small subset of the possible actions are represented in figure 7. For example:

- when the system is in state $s_{27}$, two actions $a_{217}$ and $a_{227}$ are possible ;

- when the system is in state $s_{17}$, two actions $a_{117}$ and $a_{127}$ are possible ;

- when the system is in state $s_{27}$, the action $a_{217}$ can cause two transitions:

   ○ a transition from state $s_{27}$ to state $s_{17}$ with a probability $p_{217}$ and a reward $r = 1$ ;

   ○ a transition from state $s_{27}$ to state $s_{47}$ with a probability $1 - p_{217}$ and a reward $r = 0$ ;

- when the system is in state $s_{27}$, the action $a_{227}$ can cause two transitions:

   ○ a transition from state $s_{27}$ to state $s_{57}$ with a probability $p_{227}$;
   ○ a transition from state $s_{27}$ to state $s_{67}$ with a probability $1 - p_{227}$;

- when the system is in state $s_{17}$, the action $a_{117}$ can cause two transitions:

○ a transition from state $s_{17}$ to state $s_{27}$ with a probability $p_{117}$ and a reward $r = 0$ ;

○ a transition from state $s_{17}$ to state $s_{47}$ with a probability $1 - p_{117}$ and a reward $r = -1$ ;

- when the system is in state $s_{17}$, the action $a_{127}$ can cause two transitions:

○ a transition from state $s_{27}$ to state $s_{17}$ with a probability $p_{127}$ ;

○ a transition from state $s_{27}$ to state $s_{47}$ with a probability $1 - p_{127}$.

In the example of figure 7, with a discount $\lambda = 1$ ;

- a first example of path $P_{s_{27}}(1)$ arising from state $s_{27}$ is characterized by:

○ a first state transition from state $s_{27}$ to $s_{17}$ upon the execution of action $a_{217}$ with the probability $p_{217}$ and a reward r = 1 ;

○ a second state transition from states $s_{17}$ and $s_{27}$ upon the execution of action $a_{117}$ with the probability $p_{117}$ and a reward $r = 0$ ;

○ a probability

$$P_{s_2}(1) = p_{217} \cdot p_{117};$$

○ a gain

$$G_{s_2}(1) = -1 + \lambda * 0 = -1$$

- a first example of path $P_{s_{27}}(1)$ arising from state $s_{27}$ is characterized by:

○ a first state transition from state $s_{27}$ to $s_{17}$ upon the execution of action $a_{217}$ with the probability $p_{217}$ and a reward r = 1 ;

○ a second state transition from states $s_{17}$ and $s_{47}$ upon the execution of action $a_{117}$ with the probability $1 - p_{117}$ and a reward $r = -1$ ;

○ a probability

$$P_{s_2}(1) = p_{217} \cdot (1 - p_{117}) ;$$

○ a gain

$$G_{s_2}(1) = -1 - \lambda * 1 = -2 ;$$

- it is apparent that many more examples of paths may be defined, for example with a state transition from state $s_{27}$ to $s_{47}$ upon the execution of action $a_{217}$, with a state transition from state $s_{27}$ to $s_{57}$ upon the execution of action $a_{227}$, with a state transition from state $s_{17}$ to $s_{67}$ upon the execution of action $a_{127}$., etc.

More generally:

- the path probability of the $k^{th}$ path arising from state $s$ can be noted $P_s(k)$, and the path gain of this path can be noted $G_s(k)$ ;

- the path probability of the $k^{th}$ path arising from state $s$ upon the execution of the action $a$ can be noted $P_{s,a}(k)$, and the path gain of this path can be noted $G_{s,a}(k)$.

The examples depicted in figure 7 are provided by means of simple illustrative and non-limitative examples, and many more examples of transitions and paths may be envisioned. For example:

- an action may cause a number of possible state transitions different than two. For example, an action may cause a single state transition with a probability equal to 1, or more than 2 state transitions. The sum of the probabilities of the state transitions from a same state upon the same action shall be equal to 1 ;

- two different actions may cause the same state transitions, possibly with different probabilities and reward. For example, in the example of figure 7, the action $a_{227}$ may also cause a state transition from state $s_{27}$ to $s_{17}$, but with a probability that may be different from $p_{217}$, and a reward that may be different from 1 ;

- state transitions may comprise state transitions from a state to itself, for example from state $s_{27}$ to $s_{27}$;

- the paths may comprise more than 2 transitions;

- the gains and probabilities of the path can be calculated over a finite or infinite time horizon, that is to say in a finite time window, or an infinite time window ;

- in the examples above, the gain is calculated as a sum of the rewards. It may also be calculated as a weighted sum, for example, by applying a discount factor raised to the power of an index of the transition, as shown for example in equation 1 above;

In the remaining of the disclosure, the state at which the system is in time t, and from which an action may be taken, will be called the "current state", and in a transition, the state from which the transition occurs is called "initial state", and the state to which the transition occurs the "subsequent state". For example, in the transition from state $s_{27}$ to $s_{17}$, $s_{27}$ is the initial state and $s_{17}$ the final state.

The gains and probabilities of the paths may be calculated in different ways. For example, a complete combination of all possible paths may be calculated over a time horizon. Alternatively, as will be explained below, gains and probabilities may be calculated iteratively notably using a binning rule.

The action can thus be selected for example by calculating:

$$Q(s,a,\alpha) = \sum_k P_{s,a}(k) \cdot 1\{G_{s,a}(k) > \alpha\}.$$

*(Equation 8)*

$$a^* = arg\ max_{a \in A_s} Q(s,a,\alpha),$$

*(Equation 9)*

Wherein

- $s$ is the current state ;

- $a$ is an action that belongs to the set of actions $A_s$ that may be performed in the current state ;

- $\alpha$ is the gain limit ;

- $P_{s,a}(k)$ is the probability of occurrence of the $k^{th}$ possible path arising from the current state $s$ upon the execution of the action $a$ ;

- $1\{G_{s,a}(k) > \alpha\}$ is equal to

  ◦ 1 if the gain $G_{s,a}(k)$ of the $k^{th}$ possible path arising from the current state $s$ upon the execution of the action $a$ is higher than $\alpha$ ;

◦ 0 otherwise.

- $a^*$ is the selected action, that exhibits the higher value $Q(s,a,\alpha)$ among all the possible actions.

Therefore, at the output of state S33, the action that leads the system to follow a path corresponding to series of actions and state transitions at successive time steps having a gain at least equal to or higher than a predefined value $\alpha$, with the highest probability is selected.

As explained above, according to different embodiments of the invention, some steps may be performed during a training phase or the inference phase. Therefore, according to different embodiments of the invention, the output of a training phase, and input of an inference phase, may be different.

For example, in a number of embodiments of the invention, the training phase ultimately calculates the gains $G_{s,a}(k)$ and probabilities of occurrence $P_{s,a}(k)$ of each of the $k^{th}$ possible path arising from each of the states $s$ upon the execution of the action $a$.

Therefore, in such an example, the inference phase receives as input all the values $G_{s,a}(k)$ and $P_{s,a}(k)$, and computes the equations 8 and 9 below at step S33 to select the action that leads the system to follow a path corresponding to series of actions and state transitions at successive time steps having a gain at least equal to or higher than a predefined value, with the highest probability.

In other embodiments of the invention, the training phase ultimately calculates the gains $G_s(k)$ and probabilities of occurrence $P_s(k)$ of each of the $k^{th}$ possible path arising from each of the states s, upon the assumption that the best action is selected in each state.

Therefore, in such an example, the inference phase receives as input all the values $G_s(k)$ and $P_s(k)$, as well as the transition model. In step S33, the probabilities of the paths arising from the current state upon the execution of an action can be calculated based on:

- the probabilities of performing a transition from the current state to each subsequent state in the transition model ;

- the probabilities $P_s(k)$ of following each path arising from each subsequent step.

Meanwhile, the gains associated to each of the paths arising from the current state upon the execution of an action can be calculated based on:

- the rewards associated to each of the transitions from the current state to each subsequent state in the transition model ;

- the gains $G_s(k)$ of each of the paths arising from each subsequent state, to which a discount factor may be applied.

Thus, in these embodiments the step S33 comprises calculating the values $G_{s,a}(k)$ and $P_{s,a}(k)$ for the current state, then using Equations 8 and 9 to select the action to perform.

In yet other embodiments of the invention, the training phase completely determines the action to perform in each state. Thus, the output of the training phase is an optimal policy $\pi^*$, and the step S33 consists in applying the policy $\pi^*$ to select the action to perform in the current state. The policy $\pi^*$ may for example be expressed in the form of a table which associates to each state an action to perform.

It is worth noting that in such case the policy is predetermined for a given limit $\alpha$. Therefore, the use in a policy during the inference phase is necessarily optimized for a given limit $\alpha$. On the contrary, in embodiments that rely on the use of Equations 8 and 9, or similar equations, during the inference phase, the parameter $\alpha$ can be set during the inference phase.

It is now referred to figure 8.

The figure 8 represents a section of a trellis of possible paths in a number of embodiments of embodiments of the invention.

In a number of embodiments of the invention, the probabilities and gains of paths are calculated for paths defined by a sequence of successive states.

In other embodiments of the invention, each state is associated with a reference set comprising reference gains of paths arising from the state, and reference probabilities of following the paths from the state, and a binning rule is applied to reference gains of paths arising from each state to assign the size of a reference set associated to each state comprising gains of paths arising from the state, and probabilities of said paths to a predefined size. The reference set, gains and probabilities therefore define the possible paths arising from a state, by their respective gains and probabilities.

Stated otherwise, paths that have similar gains are placed in a "bin", which defines an interval of gains. Therefore, in such a representation, a state, or a combination of a state and an action, are associated to probabilities of leading the system to follow a path in each of the bins, i.e. a path having a gain in a defined interval. For the purpose of calculation, all the paths falling in a defined bin can be associated with the same gain, for example the gain of the center of the bin. In such representation, the exact state transitions used by the paths are irrelevant, the only relevant values are the gains and probabilities of the different bins.

The bins can be predefined, so that the intervals of gains that form each bin are known in advance. In such cases, the values $G_{s,a}(k)$ and $G_s(k)$ are actually the same for all the states, because the bins are predefined for all the states. For example, a plurality of bins can be predefined by a user around expected gains from a state, or can define regularly spaced intervals between a minimum and maximum gain.

In a number of embodiments of the invention, the calculation of the gains and probabilities of the paths thus relies on an iterative calculation and a binning rule that allows maintaining the size of a reference set of gains and probabilities to a predefined size K. The principles of the iterative calculation and binning rule will be further explained below.

First of all, at each iteration, several paths arise from each state. A recursive calculation within all possible states and paths may lead to a number of possible combinations and paths which would be too large. In order to limit the number of combinations while retaining good results, the paths with similar probabilities can be merged so as to obtain K paths for a state paths. The probabilities of the K paths arising from a state can be noted as:

$$P_s = [P_s(1), \dots, P_s(K)]$$

*(Equation 10)*

The associated gains can be noted as:

$$G_s = [G_s(1), \dots, G_s(K)]$$

*(Equation 11)*

A state can thus be represented by a reference set $\Omega_s$ :

$$\Omega_s = \{P_s, G_s\}$$

*(Equation 12)*

Within the framework of the invention, it is therefore possible to define the value of a state s:

$$v(s, \alpha) = \sum_k P_s(k) \cdot 1\{G_s(k) > \alpha \mid s\},$$

*(Equation 13)*

Stated otherwise, the value of a state can be represented as the probability that, when the system is in the state, a path having a gain higher than $\alpha$ will ultimately be followed.

It is worth noting that the notations above are not dependent upon an action *a*. This is because, in the iterative calculation, an action is automatically associated to each state, either by applying a predefined policy, or by automatically selecting the action that maximize the value of the state.

In the example of figure 8, a trellis is represented between an initial state $s_{18}$ and two possible subsequent states $s'_{18}$ and $s'_{28}$ . The two possible state transitions are the following:

- transition from $s_{18}$ to $s'_{18}$ , with the state a probability *p* and a reward $r(s'_{18})$ ;

- transition from $s_{18}$ to $s'_{28}$ , with a probability (1 - *p*) and a reward $r(s'_{28})$ .

In an iteration, a reference set of $s_{18}$ will be calculated based on the reference sets $\Omega_{s'_{18}} = \{P_{s'_{18}}, G_{s'_{18}}\}$ of state $s'_{18}$ and $\Omega_{s'_{28}} = \{P_{s'_{28}}, G_{s'_{28}}\}$ of state $s'_{28}$. The reference sets $\Omega_{s'_{18}}$ and $\Omega_{s'_{28}}$ are previously estimated, and the vectors $P_{s'_{18}}, G_{s'_{18}}, P_{s'_{28}}$ and $G_{s'_{28}}$ are all of size K.

The reference set $\Omega_{s_{18}} = \{P_{s_{18}}, G_{s_{18}}\}$ of state $s_{18}$ can initially be calculated as:

$$P_{s_{18}} = [p \cdot P_{s'_{18}}, (1-p) \cdot P_{s'_{28}})],$$

*(Equation 14)*

$$G_{s_{18}} = \left[ r(s'_{18}) + \lambda \cdot G_{s'_{18}}, r(s'_{28}) + \lambda \cdot G_{s'_{28}} \right].$$

*(Equation 15)*

Where $\lambda$ is the discount factor with $0 < \lambda \le 1$.

At this stage, the size of the set $\Omega_{s_{18}}$ is equal of 2 * K (because there are two subsequent states; it would be in general n times K for a number of subsequent states n).

In order to limit the size of the set, a binning rule is applied to $G_{s_{18}}$, then $P_{s_{18}}$. The binning rule merges some paths in order to transform the vector $G_{s_{18}}$ into a vector $G^{ref}_{s_{18}}$ of size K. More generally, at each iteration and for each path, the binning rule may be applied to transform a vector $G_s$ into a vector $G^{ref}_s$ of size K, and the vector of probabilities can be merged accordingly. For example, the paths that have a gain difference smaller than $\varepsilon$ can be merged. The path may also be merged within predefined bin, where a bin is an interval of possible gains. The intervals characterizing the bins, for example their sizes and centers, can be predetermined. For example, for a state $s$, the bins can be defined so that $G^{ref}_s(K/2) = v(s)$.

Assuming that the binning function has already be applied to the states $s'_{18}$ and $s'_{28}$, and that the vectors of gains associated with these two states are therefore $G^{ref}_{s'_{18}}$ and $G^{ref}_{s'_{28}}$, the reference vector of gains for state $s_{18}$ can be calculated by:

$$G_{s_{18}} = \left[ r(s'_{18}) + \lambda \cdot G^{ref}_{s'_{18}}, r(s'_{28}) + \lambda \cdot G^{ref}_{s'_{28}} \right].$$

*(Equation 16)*

Then:

$$G^{ref}_{s_{18}} = Bin(G_{s_{18}}, K)$$

*(Equation 17)*

Where $Bin(G_s, x)$ represents the application of the binning rule to the vector x.

To provide a concrete example of binning rule, let's assume that $G^{ref}_{s_{18}} = G^{ref}_{s'_{18}} = G^{ref}_{s'_{28}} = [1, 3]$, $r(s'_{18}) = 2, r(s'_{28}) = 0$, and $\lambda = 0.8$. We therefore get $G_{s_1} = [2.8, 4.4, 0.8, 2.4]$. The binning rule may separate the path (index 3 in $G_{s_1}$) having a gain close to 1 from the 3 paths (indexes 1, 2 and 4 in $G_{s_1}$) having a gain close to 3, therefore resulting into $P_{s_{18}}^{ref} = \left[ P_{s_1}(3),\ P_{s_1}(1) + P_{s_1}(2) + P_{s_1}(4) \right]$ .

Concrete examples of iterative calculations of gains and probabilities of paths will now be presented below.

It is now referred to figure 4.

The figure 4 represents an iterative method P4 of calculation of gains and probabilities of paths given an input policy $\pi$. The method P4 can thus be executed during a training phase. The reference gains and probabilities thus obtained can then be used during an inference phases, for example by the method P3.

The method P4 comprises a first step S40 of obtaining, for each state in said set of possible states S, an initial reference set $\Omega_s = \{ G_s^{ref}, P_s^{ref} \}$ wherein $G_s^{ref}$ and $P_s^{ref}$ are both of size K.

Then a loop S44 is performed for each state s in the set $S$ of possible states. For each state, the steps below are executed for each state .

In a first substep S41, an action $a$ to perform in the state s according to the policy $\pi$.

A second substep S42 consists in re-defining the initial reference set of the state by concatenating, for each subsequent state having a non-null probability of transition from said state using said selected action: the reference gains in the reference set of said subsequent state, multiplied by a discount factor and added to a reward of the transition from said state to said subsequent state , and the reference probabilities of said subsequent state, multiplied by said non-null probability of transition.

The gains may be calculated as:

$$G_s = \left[ r(s_{j1}) + \lambda \cdot G_{s_{j1}}^{ref}, \ldots, r(s_{jk}) + \lambda \cdot G_{s_{jk}}^{ref}, \ldots \right].$$

(Equation 18)

For each state with a non-zero transition probability $p(s_{jk}|s,a)$.

Then the probabilities as :

$$P_s = \left[ p(s_{j1}|s, a) \cdot P_{s_1}, \ldots, p(s_{jk}|s, a) \cdot P_{s_{jk}}, \ldots \right)]$$

(Equation 19)

Then, the iteration comprises a substep S43 of reducing the size of the reference set of the state to said predefined size K by applying the binning rule to the reference gains of the state.

When the sub-steps S41 to S43 are executed for a state, a sub-step S44 verifies if they need to be executed for a further state. If this is the case, sub-steps S41 to S43 are executed for the further state. Otherwise, a step S45 is executed to verify if a stop criterion is met.

If the stop criterion is not met, a new iteration of executing the sub-steps S41 to S43 for all the states is performed.

Otherwise, the method is completed, and the reference gains and probabilities are calculated for each state.

This therefore provides an effective way of calculating the reference gains and probabilities for a given policy.

It is of course possible to repeat the method P4 for a plurality of different policies, in order to select the policy that allows, in a given state, maximizing the probability of leading to a gain above a predefined value.

It is now referred to figure 5.

Figure 5 represents a computer-implemented method P5 for calculating the reference gains and probabilities.

The method P5 does not take as input a predefined policy, but iteratively builds an optimized policy, by selecting an optimized action for each state at each iteration.

The sub-step S41 is therefore replaced by sub-steps S51 and S52, while the other steps and sub-steps are similar to those of the method P4.

The step S51 aim at determining the probabilities $P_{s,a}(k)$ of following a path having a gain in each bin k in the state $s$ upon the execution of the action $a$. To this effect, the step S51 may comprises obtaining, for each possible action in said state, probabilities of going to each subsequent state ' upon the execution of the possible action $a$ in said state s. Such probabilities $p(s'|s,a)$ can be for example retrieved from the transition model. These probabilities, associated with the rewards of each transitions, and the reference sets $\{ P_{s'}(k), G_{s'}^{ref}(k) \}$ of each subsequent state $s'$, allow determining the probabilities $P_{s,a}(k)$ of following a path having a gain in each bin k in the state $s$ upon the execution of the action $a$.

The step S52 comprises selecting the action of said possible actions that, from said state, leads the system to follow a path corresponding to series of actions and state transitions at successive time steps having a gain at least equal to or higher than a predefined value, with the highest probability.

For example, knowing the probabilities of transitions from the state to the possible subsequent states, and the reference sets of the subsequent states, it is possible to compute a probability that an action leads to a gain at least equal to or higher than the predefined value $\alpha$:

$$Q(s,a,\alpha) = \sum_k P_{s,a}(k) \cdot 1\{G_s^{ref}(k) > \alpha\}.$$

*(Equation 20)*

Then, the action $a^*$ to perform can be selected as :

$$a^* = arg\ max_{a \in A_s}\ Q_n(s,a,\alpha)$$

*(Equation 21)*

For the application of the binning rule, the reference probabilities are therefore those obtained with the selected action $a^*$.

The value of the state can also be defined as:

$$v(s,\alpha) = Q(s,a^*,\alpha).$$

*(Equation 22)*

In practice, this equation is equivalent to Equation 13.

Therefore, an optimized policy is iteratively built.

For each of the methods P4 and P5, different stop criteria can be used. For example, the stop criterion may be based on:

- a maximum number of iterations ;

- a criterion of convergence of the gains between two successive iterations ;

- etc.

It is now referred to figure 6.

Figure 6 represents a third example of a computer-implemented method P6 for calculating the reference gains and probabilities.

In the example of figure 6, the step S32 of using the transition model further comprises using a machine learning model trained to predict path probabilities from a state of the paths arising from said state to have a gain falling each interval among a plurality of intervals of possible gains.

The machine learning model is therefore trained to predict the probabilities of following a path from a given state upon the assumption that an optimal action is executed in each state.

For example, the machine learning model may be iteratively trained using error signals calculated as a cost function based on predictions of path probabilities from an initial state and predictions of path probabilities from subsequent states multiplied by the probabilities of transitions from said initial state to said subsequent states upon the execution of the action that, from said initial state, leads the system to follow a path having a gain at least equal to or higher than a predefined value with the highest probability.

For example, the learning phase may here consist in training a machine learning model to predict, from an initial state $s$ an, the probabilities $P_s(k)$ of the system to follow a path having a gain within the bin k from the state $s$. In the example of figure 6, the probabilities therefore do not represent probabilities of following a defined path, but probabilities of following a path whose gain is in a defined bin. The bins can be predefined. For example, a plurality of bins can be predefined by a user around expected gains from a state, or can define regularly spaced intervals between a minimum and maximum gain.

Then, in the inference phase the probabilities of the paths arising from the current state upon the execution of an action can be calculated based on:

- the probabilities of performing a transition from the current state to each subsequent state in the transition model ;

- the probabilities $P_s(k)$ of following each path in each subsequent step.

Meanwhile, the gains associated to each of the paths arising from the current state upon the execution of an action can be calculated based on:

- the rewards associated to each of the transitions from the current state to each subsequent state in the transition model ;

- the gains $G_s(k)$ of following each path for each subsequent step, to which a discount factor may be applied.

Thus, the inference phase may comprise calculating the values $G_{s,a}(k)$ and $P_{s,a}(k)$ for the current state, then using Equations 8 and 9 to select the action to perform.
In the example of figure 6, the training method P6 comprises a double loop to train the machine learning model to minimize a cost function:
The loop S67 loops over a plurality of states to calculate a value of a cost function for the state.
The loop S67 may for example loop through all the states, or a subpart thereof, to obtain a plurality of values of cost function for a plurality of states respectively.
At the output of the loop S67; a step S68 consists in updating the machine learning model based on a plurality of values of said cost function calculated for said plurality of states.
At the output of step S68, a step S69 consists in verifying if a stop criterion is met or not. If the stop criterion S69 is met, the training phase terminates, and the machine learning model can be used in inference by the method P3.
Otherwise, a new loop of steps S61 to S68 is performed, until the stop criterion is met.
The stop criterion may be for example relative to one or more of a number of iterations, or a criterion of convergence. The stop criterion may for example comprise one or more of:

- a comparison of a number of iterations to a threshold ;

- a comparison of an average value of the cost function at the output of the update at step S68 ;

- a comparison of the difference between an average value of the cost function between two successive time steps ;

- etc.

Within the loop S67, the steps S61 to S66 determine a value of the cost function for a selected state.
The step S61 consists in using the machine learning model to calculate predictions of path probabilities from said initial state. Thus, the machine learning model as currently trained is applied to the selected state.
Then, the steps S62 to S64 are repeated for each possible action that may be executed from said selected state.
The step S62 consists in retrieving, from said transition model, probabilities of going to each subsequent state upon the execution of said possible action, and associated rewards in the transition model.
Thus, at the output of the step S62, all the state transitions to each possible subsequent state are known, along with the associated probability of transition and reward for the transition.
The step S63 consists in using the machine learning model to calculate predictions of path probabilities from each of said subsequent state.
Thus, at the output of step S63, it is known for each subsequent state what are the probabilities of following a path having a gain in each of the bin from the subsequent state, upon the current learning of the model.
The step S64 consists in calculating, from said predictions of path probabilities of from each of said subsequent state, and probabilities of going to each subsequent state upon the execution of said possible action, and associated rewards, predictions of path probabilities from said initial state upon the execution of said possible action.
In step S64, the probabilities of transitions, rewards of transitions and probabilities and gains of each bin in each subsequent state can thus be used to calculate a probability of following a path having a gain in each of the bin from the selected state, upon the execution of each possible action.
The step S65 consists in selecting from said predictions of path probabilities of from said initial state upon the execution of said possible action, the action that, from said initial state, leads the system to follow a path having a gain at least equal to or higher than a predefined value with the highest probability.

Stated otherwise, the optimal action for the state, upon the current training of the model, is selected at step S65. Equations 8 and 9 may for example be used in step S65.

The step S66 consists in calculating a value of the cost function based on the predictions of path probabilities of from said initial state, and predictions of path probabilities of from said initial state upon the execution of said possible action that, from said initial state, leads the system to follow a path having a gain at least equal to or higher than a predefined value with the highest probability.

In substance, the cost function consists in estimating differences between two calculations of the path probabilities:

- one which is obtain by applying directly the machine learning model on the selected state ;

- one which is obtained by applying the machine learning model on the subsequent states, and combining this information with the transitions probabilities and rewards from the transition model.

If the machine learning model is properly trained the difference between the two calculations shall be low.

Indeed, this means that the successive updates of the model based on this cost function train the machine learning model to provide path probabilities associated with bins which are consistent with the transition model. Thus, during the inference phase, the machine learning model can be used directly to predict probabilities of following a path in each bin from a current state. The selection of the action at step S33 in the inference phase will therefore actually leads the system to follow a path corresponding to series of actions and state transitions at successive time steps having a gain at least equal to or higher than a predefined value, with the highest probability.

Thus, the method P6 provides an efficient manner of training a machine learning engine to predict probabilities of leading the system to follow a path whose gain falls in a defined bin, upon the execution of an action in a state. It is however provided by means of example only of an application of a machine learning model to predict probabilities of leading the system to follow a path having a defined gain in an embodiment of the invention.

This disclosure is not limited to the method, device and computing program described here, which are only examples. The invention encompasses every alternative that a person skilled in the art would envisage when reading this text.

**Claims**

1. A computer-implemented method (P3; P4; P5) to select an action (a) among a set of possible actions (A) to perform in a system in a current state (s) among a set of possible states (S) of the system at a time step (t), said method comprising:

   - performing a selection of (S33) the action that, from said current state, leads the system to follow a path corresponding to series of actions and state transitions at successive time steps having a gain at least equal to or higher than a predefined value, with the highest probability ;
   - causing (S34) the system to perform said action.

2. The computer-implemented method of claim 1, wherein said selection is based upon:

   - retrieving (S31) a transition model defining, for at least one state transition from an initial state to a subsequent state between two successive time steps, a probability of performing the transition from the initial state to the subsequent state upon the execution of an action belonging to a set of possible actions to perform in the initial state, and a reward associated with the transition ;
   - using at least the transition model to calculate (S32), for a plurality of paths:

     ∘ gains of said plurality of paths;
     ∘ probabilities of said plurality of paths.

3. The computer-implemented method of claim 2, wherein

   - gains of said plurality of paths are calculated as cumulative rewards of series of successive state transitions and actions of each path of said plurality of paths at successive time states ;
   - probabilities of said plurality of paths are calculated as combined probabilities of each combination of a state transition and action of each path of said plurality of paths at successive time states.

4. The computer-implemented method of claim 3, in which a binning rule is applied to reference gains of paths arising from each state to get a size of a reference set associated to each state comprising gains of paths arising from the state, and probabilities of said paths to a predefined size.

5. The computer-implemented method of claim 4, wherein using the model to calculate gains and probabilities comprises performing an iterative calculation, for each state in said set of possible states, of a reference set of the state comprising reference gains ($G_s$) of the paths arising from said state upon the execution of an action, and reference probabilities of causing the system to follow said paths arising from said state upon the execution of said action, said iterative calculation applying at each iteration said binning rule.

6. The computer-implemented method (P4) of one of claim 5, wherein said iterative calculation comprises:

   - obtaining (S40), for each state in said set of possible states, an initial reference set;
   - until a stop criterion is met (S45):

     ∘ for each state (S44) in said set of possible states ;

       ▪ selecting (S41) an action to perform in said state according to a policy ;
       ▪ re-defining (S42) said initial reference set of the state by concatenating, for each subsequent state having a non-null probability of transition from said state using said selected action:

         • the reference gains in the reference set of said subsequent state, multiplied by a discount factor and added to a reward of the transition from said state to said subsequent state ;
         • the reference probabilities of said subsequent state, multiplied by said non-null probability of transition ;

       ▪ reducing (S43) the size of the reference set of the state to said predefined size by applying the binning rule to the reference gains of the state.

7. The computer-implemented method (P5) of one of claim 5, wherein said iterative calculation comprises:

   - obtaining (S40), for each state in said set of possible states (S), an initial reference set ($\Omega_s$) ;
   - until a stop criterion is met (S45):

     ∘ for each state (S44) in said set of possible states (S):

       ▪ obtaining (S51), for each possible action in said state, probabilities $\left(P_{s,a}^{bin}\right)$ of going to each subsequent state upon the execution of the possible action in said state ;
       ▪ selecting (S52) the action of said possible actions that, from said state, leads the system to follow a path corresponding to series of actions and state transitions at successive time steps having a gain at least equal to or higher than a predefined value, with the highest probability;
       ▪ re-defining (S42) said initial reference set of the state by concatenating, for each subsequent state having a non-null probability of transition from said state using said selected action:

         • the reference gains in the reference set of said subsequent state, multiplied by a discount factor and added to a reward of the transition from said state to said subsequent state ;
         • the reference probabilities of said subsequent state, multiplied by said non-null probability of transition

       ▪ reducing (S43) the size of the reference set of the state to said predefined size (K) by applying the binning rule to the reference gains of the state.

8. The computer-implemented method of claim 2, wherein said step of using the transition model further comprises using a machine learning model trained to predict path probabilities from a state of the paths arising from said state to have a gain belonging to each interval among a plurality of intervals of possible gains.

9. The computer-implemented method of claim 8, wherein said machine learning model is iteratively trained using error signals calculated as a cost function based on predictions of path probabilities from an initial state and predictions of path probabilities from subsequent states multiplied by the probabilities of transitions from said initial state to said subsequent states upon the execution of the action that, from said initial state, leads the system to follow a path having a gain at least equal to or higher than a predefined value with the highest probability.

10. The computer-implemented method (P6) of claim 9, wherein said iterative calculation comprises:

- until a stop criterion is met (S69):

  ◦ performing a loop of selection of a plurality of states (S67) in said set of possible states (S), and, for each state in said plurality of states:

    ▪ using the machine learning model to calculate (S61) predictions of path probabilities of from said initial state ;
    ▪ for each possible action in said state:

      • retrieving (62), from said transition model, probabilities of going to each subsequent state upon the execution of said possible action, and associated rewards in the transition model ;
      • using (S63) the machine learning model to calculate predictions of path probabilities from each of said subsequent state;
      • calculating (S64), from said predictions of path probabilities of from each of said subsequent state, and probabilities of going to each subsequent state upon the execution of said possible action, and associated rewards, predictions of path probabilities from said initial state upon the execution of said possible action ;

    ▪ selecting (S65), from said predictions of path probabilities of from said initial state upon the execution of said possible action, the action that, from said initial state, leads the system to follow a path having a gain at least equal to or higher than a predefined value with the highest probability ;
    ▪ calculating (S66) a value of said cost function based on the predictions of path probabilities from said initial state, and predictions of path probabilities from said initial state upon the execution of said possible action that, from said initial state, leads the system to follow a path having a gain at least equal to or higher than a predefined value with the highest probability ;

  ◦ updating (S68) the machine learning model based on a plurality of values of said cost function calculated for said plurality of states.

11. The method of any of the preceding claims, implemented by a resource allocator of said system, wherein:

- said set of possible actions corresponds to possible resource allocations in said state ;
- said rewards are defined according to outcomes of the resource allocations and state transitions for the system.

12. The method of the preceding claim, implemented by a radio resources scheduler of a radio communication network, wherein :

- said set of possible actions correspond to possible allocations of radio resources to users of the radio communication network;
- at least one probability of performing a state transition depends upon a probability of a user of the radio communication network to successfully send a packet over the network when a radio resource is allocated to it;
- at least one reward depends upon the compliance with time constraints of sending at least one packet.

13. A computing device comprising at least one processing unit configured to implement a method according to one of claims 1 to 12.

14. A radio resource scheduler of a radio communication network, comprising at least one processing unit configured to implement a method according to one of claims 1 to 12.

15. Computer software comprising instructions to implement at least a part of a method according to one of claims 1 to 12 when the software is executed by a processor.

**FIG. 1**

**FIG. 2**

EP 4 383 790 A1

Obt Mod — S31

Obt P, G — S32

Sel a in A(s) — S33

Caus a — S34

P3

# FIG. 3

$$S40 \quad \text{Obt } \Omega = \{P_s, G_s\}$$

$$S41 \quad \text{Sel } a(s, \pi)$$

$$S42 \quad \text{Obt } \Omega_s = \{P_s, G_s\}$$

$$S43 \quad G_s^{ref} = Bin(G_s, K)$$

$$S44 \quad \forall s \in S ?$$

$$S45 \quad \text{Stp crit ?}$$

P4

# FIG. 4

S40 — Obt $\Omega_s = \{P_s, G_s\}$

S51 — Calc $P_{s,a}^{bin}$

S52 — Sel a

S42 — Obt $\Omega_s = \{P_s, G_s\}$

S43 — $G_s^{ref} = Bin(G_s, K)$

S44 — $\forall s \in S$ ?

S45 — Stp crit ?

P5

# FIG. 5

S61 — Calc Prob Path

S62 — Ret Trans Mod

S63 — Calc prob subs state

S64 — Calc Prob Path Subs

S65 — Sel a

S66 — Calc cost fct

S67 — Next S ?

S68 — Upd

S69 — Stp crit ?

P6

# FIG. 6

$S_{17}$

$S_{27}$

$a_{217}$

$S_{37}$

$a_{117}$

$S_{47}$

$a_{127}$

$S_{57}$

$a_{227}$

$S_{67}$

$t$            $t+1$            $t+2$

# FIG. 7

$S'_{18}$

$S_{18}$

$S'_{28}$

# FIG. 8

EUROPEAN SEARCH REPORT

Application Number

EP 22 30 6786

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/069309 A1 (ERICSSON TELEFON AB L M [SE]) 15 April 2021 (2021-04-15) * the whole document * | 1-15 | INV. H04W24/02 G06N7/01 G06N20/00 G06N3/006 |
| X | GU ZHOUYOU ET AL: "Knowledge-Assisted Deep Reinforcement Learning in 5G Scheduler Design: From Theoretical Framework to Implementation", IEEE JOURNAL ON SELECTED AREAS IN COMMUNICATIONS, IEEE SERVICE CENTER, PISCATAWAY, US, vol. 39, no. 7, 10 May 2021 (2021-05-10), pages 2014-2028, XP011860431, ISSN: 0733-8716, DOI: 10.1109/JSAC.2021.3078498 [retrieved on 2021-06-16] * the whole document * | 1-15 | |

TECHNICAL FIELDS SEARCHED (IPC)

H04W
G06N

The present search report has been drawn up for all claims

| Place of search | Date of completion of the search | Examiner |
|---|---|---|
| The Hague | 18 April 2023 | Ntarlagiannis, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 30 6786

This annex lists the patent family members relating to the patent documents cited in the above-mentioned European search report.
The members are as contained in the European Patent Office EDP file on
The European Patent Office is in no way liable for these particulars which are merely given for the purpose of information.

18-04-2023

| Patent document cited in search report | | Publication date | Patent family member(s) | | Publication date |
|---|---|---|---|---|---|
| WO 2021069309 | A1 | 15-04-2021 | US | 2022343117 A1 | 27-10-2022 |
| | | | WO | 2021069309 A1 | 15-04-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **R. S. SUTTON ; A. G. BARTO.** Reinforcement Learning, An Introduction. The MIT Press, 2020